# EUROPÄISCHE PATENTSCHRIFT

(11) **EP 0 832 386 B1**
(45) Veröffentlichungstag und Bekanntmachung des Hinweises auf die Patenterteilung: **24.09.2003**
(21) Anmeldenummer: 97922950.7
(22) Anmeldetag: 02.05.1997
(51) Int. Cl.: F16K 11/044, F23G 7/06

(54) **SCHALTBARER VERTEILER FÜR FLUIDE**
SWITCHABLE FLUID DISTRIBUTOR
DISTRIBUTEUR DE FLUIDES COMMUTABLE

(30) Priorität: 03.05.1996 DE 19617790
(43) Veröffentlichungstag der Anmeldung: 01.04.1998
(73) Patentinhaber: Marold, Freimut Joachim, 71093 Weil im Schönbuch (DE); Oh, Sukin, Kwang Ju 506-253 (KR)
(72) Erfinder: Marold, Freimut Joachim, 71093 Weil im Schönbuch (DE); Oh, Sukin, Kwang Ju 506-253 (KR)
(74) Vertreter: Keller, Günter, Dr.
(86) Internationale Anmeldenummer: EP9702263
(87) Internationale Veröffentlichungsnummer: WO97042439

(56) Entgegenhaltungen:
- EP-A- 0 587 064
- EP-A- 0 702 195
- DE-A- 1 500 089
- US-A- 4 909 307
- US-A- 5 453 259
- US-A- 5 538 693

## Beschreibung

Die Erfindung betrifft schaltbare Verteiler von Fluiden, die in instationären Prozessen in Anlagen zum Trocknen und Adsorbieren, Druckwechseladsorptionsanlagen, Anlagen zur thermischen Nachverbrennung oder Absorptions/Desorptionsanlagen zur Schaltung und Verteilung eingesetzt werden können. Insbesondere können sie in Verfahren zur regenerativen Nachverbrennung schadstoffhaltiger Abgase eingesetzt werden, bei denen dadurch auf einfache Weise sehr hohe Reinigungsgrade erzielt werden können. Die Erfindung betrifft ebenfalls eine Vorrichtung und ein Verfahren zur Durchführung eines instationären Prozesses in Anlagen zum Trocknen und Adsorbieren, Druckwechseladsorptionsanlagen, Anlagen zur thermischen Nachverbrennung oder Absorptions/Desorptionsanlagen, insbesondere eine Vorrichtung und ein Verfahren zur regenerativen Nachverbrennung.

Verfahren und Vorrichtungen zur regenerativen Nachverbrennung schadstoffhaltiger Abgase sind im Stand der Technik bekannt und beispielsweise in "Keramische Zeitschrift", 48, (2), 1996, Seite 124 ff, in "Chem.-Ing.-Tech.", 60, Nr. 6 (1988), Seite 435 ff oder auf dem Informationsseminar der C.T.P. in einem Vortrag zum Seminar "Abluftreinigung in der Spanplattenindustrie" vom 30. Mai 1994 beschrieben.

Bei den Verfahren zur thermischen Nachverbrennung des Standes der Technik werden zur Verteilung der Gasströme schaltbare Verteiler für Gase oder, häufiger, Ventile oder Klappen verwendet. Die bekannten technisch eingesetzten schaltbaren Verteiler für Gase arbeiten nach dem Prinzip, wie es zum Beispiel in den Produktbroschüren der Firma GEFA Processtechnik GmbH (W 014/6.95/buc) beschrieben ist. Speziell bei großtechnischen Anlagen und insbesondere bei der Verteilung von Gasströmen bei der regenerativen Nachverbrennung hat ein solcher Verteiler jedoch erhebliche Nachteile, wie ein hoher Kraftbedarf bei der Schaltung sehr großer Anlagen. Daher sind größere Armaturen (DN 200, 250) Sonderkonstruktionen und werden in der regenerativen Nachverbrennung üblicherweise nicht eingesetzt. Ferner sind Mehrwegarmaturen sinnvoll nur bis maximal 4 Wege einsetzbar (konventionelle Technik mit Küken oder Kugel etc.). Konventionelle Verteiler erfordern somit einen komplizierten Leitungsaufbau, eine aufwendige Steuerung und beim Schalten insbesondere großtechnischer Anlagen muß eine hohe Anfangsleistung erbracht werden, um den mechanischen Schaltvorgang zu bewirken.

Die im Stand der Technik häufig verwendeten Ventile oder Klappen erfordern einen ausgesprochen komplexen Leitungsaufbau und eine entsprechende Steuerungselektronik, wie nachstehend noch weiter ausgeführt wird.

Vorrichtungen zur regenerativen Nachverbrennung sind im Handel erhältlich und werden in großem Umfang überall dort eingesetzt, wo schadstoffhaltige Abgase auftreten, beispielsweise in der Keramik- oder Ziegelindustrie, der chemischen Industrie im weitesten Sinne, bei Lackierereien, der Lebensmittelindustrie, der Elektronikindustrie oder der Papierherstellung. Je nach gewünschtem Reinigungsgrad werden diese Anlagen als Zwei- oder Dreibettanlagen ausgeführt. Die Zweibettvariante ist eine ökonomische Lösung die Reinigungsleistungen von 96 bis 98% bieten soll.

Gerade in jüngerer Zeit werden aber immer höhere Anforderungen an die Abgasreinheit beispielsweise bei chemischen Verfahren gestellt, so daß eine Reinigungsleistung von 96 bis 98% häufig nicht mehr ausreicht. Zur Verbesserung der Reinigungsleistung wurden im Stand der Technik Dreibettanlagen eingesetzt, die einen Reinigungswirkungsgrad von mehr als 99% garantieren sollen.

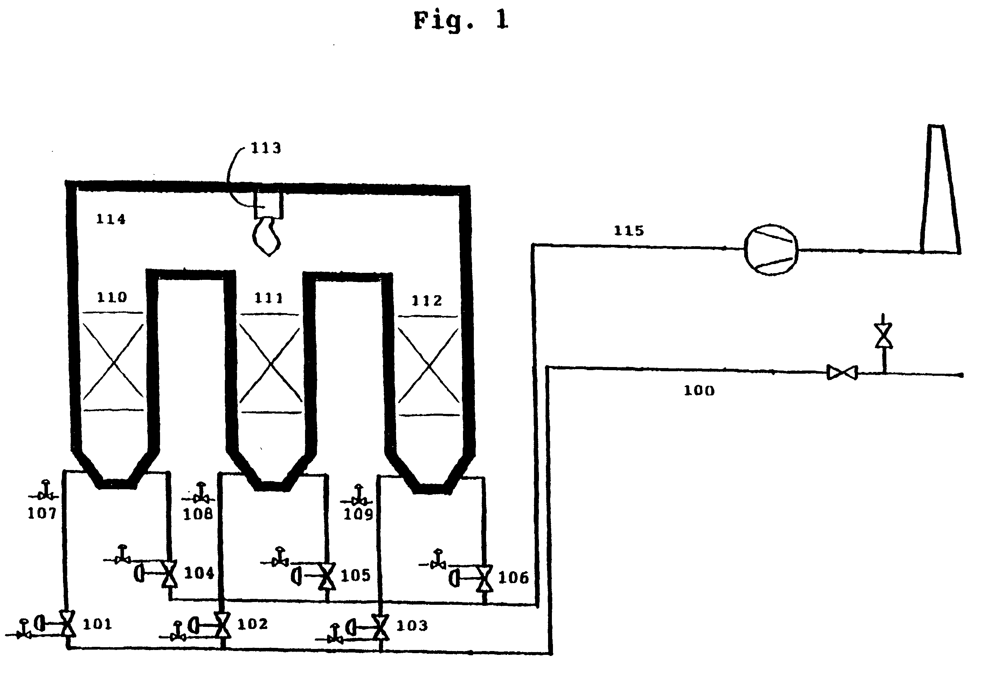

Eine solche Dreibettanlage wie sie beispielsweise von der Firma CTP unter der Bezeichnung "CTP Autotherm" vertrieben wird, ist schematisch vereinfacht in Figur 1 gezeigt. Bei diesem Verfahren des Standes der Technik wird zunächst das Rohgas 100 über das geöffnete Ventil 101 in den Wärmetauscher des ersten Bettes 110 und von dort in den Brennerraum 114 mit dem Brenner 113 geleitet. Die Ventile 102, 103, 104 und 106 sind zunächst geschlossen. Das Gas wird aus dem Brennerraum 114 über den Wärmetauscher 111 und das geöffnete Ventil 105 über die Abluft 115 abgeleitet. Die Reinluftventile 107 und 108 sind zunächst geschlossen, das Reinluftventil 109 ist geöffnet, so daß der Wärmetauscher 112 mit Reinluft gespült wird. Die Spülung erfolgt indem Reinluft über das Ventil 109 auf den Wärmetauscher 112 geleitet wird, dort die rückstandhaltige Luft austreibt und über die Nachverbrennung im Nachverbrennungsraum 114 und den Wärmetauscher 111 abgeleitet wird. Der Wärmetauscher 111 wird während dieses Verfahrensschritts stark aufgeheizt und das austretende Gas wird abgekühlt.

Nach einer vorbestimmten Schaltperiode werden die Ventile 101, 105 und 109 geschlossen und die Ventile 102, 106 und 107 geöffnet. Das eintretende Gas wird nun über das Ventil 102 und den stark aufgeheizten Wärmetauscher 111 geleitet, dort vorerhitzt und in den Brennerraum 114 mit dem Brenner 113 verbrannt. Die Ableitung erfolgt nunmehr über den Wärmetauscher 112 der im vorhergehenden Schritt durch den Reinluftstrom gereinigt wurde und das Ventil 106 zur Abluft 115. Hierbei wird der Wärmetauscher 112 aufgeheizt und das Gas abgekühlt. Der Wärmetauscher 110 wird in diesem Verfahrensschritt mit Reinluft gespült, wobei Rückstände des Rohgases ausgetrieben werden, wie vorher beim Wärmetauscher 112 beschrieben.

Nach einer weiteren Schaltperiode werden nunmehr die Ventile 102, 106 und 107 geschlossen und die Ventile 103, 104 und 108 geöffnet. Das Rohgas fließt nunmehr über das Ventil 103 auf den zuvor stark erhitzten Wärmetauscher 112, wird dort erhitzt und anschließend im Verbrennungsraum 114 mittels des Brenners 113 nachverbrannt. Es fließt dann über den zuvor gereinigten Wärmetauscher 110 und das Ventil 104 zur Außenluft 115 ab, während der Wärmetauscher 111 durch Reinluft über das Ventil 108 gereinigt wird. Nach wiederum einer weiteren Schaltperiode beginnt der Kreislauf von neuem.

Wie aus der vorstehend beschriebenen Darstellung ersichtlich, erfordert das Dreibettverfahren unter Verwendung herkömmlicher Ventile oder Klappen eine sehr aufwendige Verschaltung und komplexe Steuerungselektronik. Generell nachteilig bei Dreibettanlagen ist ebenfalls ein recht großer Platzbedarf, da drei im wesentlichen gleich große Betten mit Wärmetauscher zur Verfügung gestellt werden müssen. Eine Nachrüstung von Zweibettanlagen zu Dreibettanlagen beispielsweise wegen höherer Umweltauflagen ist ausgesprochen kostspielig und nur möglich, wenn genügend Platz für die zusätzliche Verschaltung und das zusätzliche dritte Bett vorhanden ist. Eine Verringerung des Platzbedarfs für die Schaltungen wäre hier von großem Vorteil.

Ebenfalls im Stand der Technik bekannt sind Dreibettanlagen, bei denen das Spülgas des jeweils zu reinigenden Bettes nicht direkt in den Brennerraum geleitet wird, sondern dem Rohgas wieder zugeführt wird. Diese Ausführungsform des Standes der Technik erfordert einen noch komplexeren Schaltungsaufbau als das vorgehend beschriebene Verfahren.

Bei den ebenfalls gebräuchlichen Zweibettanlagen ist der Schaltaufwand zwar geringer, aber ebenfalls noch beträchtlich. Zudem gewährleisten herkömmliche Zweibettanlagen nur eine verhältnismäßig geringe Reinigungsleistung.

In der EP-A 587 064 wird ein Verfahren und eine Vorrichtung zur regenerativen Nachverbrennung schadstoffhaltiger Abgase beschrieben, wobei ein Teil des Abluftkanals als Puffer eingesetzt wird, der während des Schaltvorgangs das Totvolumen aufnehmen soll. Das Totvolumen wird dann zu dem zu reinigenden Abgas rückgeführt. Mit dieser aus der EP-A 587 064 bekannten Vorrichtung ist eine erhebliche Verbesserung der Reinigungsleistung möglich, die dort beschriebene Gasverteilung unter Verwendung der Klappentechnik erfordert aber ebenfalls einen komplizierten Leitungsaufbau und eine aufwendige Steuerung. So sind für die Schaltung der Gase zumindest sechs Klappen und eine entsprechende Ansteuerelektronik erforderlich.

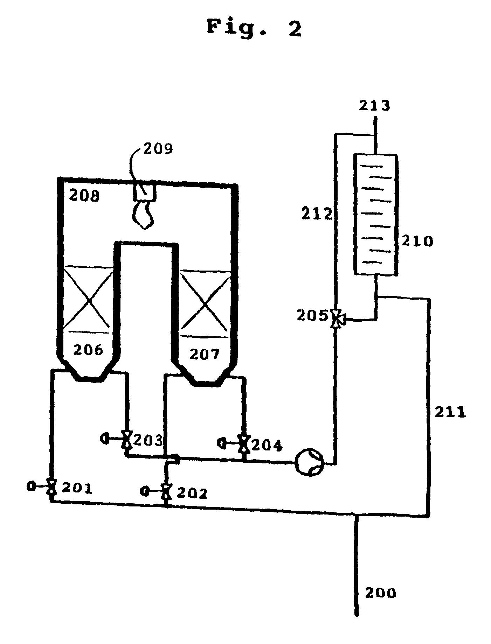

In Figur 2 wird eine Vorrichtung zur regenerativen Nachverbrennung gezeigt, die als Zweibettanlage zur regenerativen Nachverbrennung unter Verwendung eines Pufferbehälters ausgestaltet ist. Hier sind Ventile 201, 202, 203 und 204 vorgesehen. Die Zweibettanlage weist die Betten 206 und 207 sowie den Brennerraum 208 und den Brenner 209 auf. Zusätzlich ist noch ein weiteres Schaltersystem 205 vorhanden, der geeignet ausgestaltet ist. Das Schaltersystem 205 kann das austretende Gas entweder direkt über die Leitung 212 ableiten oder zu einem Pufferbehälter 210 leiten, der eine Ableitung 213 und eine Ableitung 211 aufweist, die zum Eintrittsgas 200 führt. Der Pufferbehälter ist gegenüber der Austrittssleitung 213 vorzugsweise in leichtem Unterdruck und weist bevorzugt spezielle Vorrichtungen, zum Beispiel Schikanen auf, die eine Rückvermischung mit dem Reingas vermindern sollen. Der leichte Unterdruck in dem Pufferbehälter 210 kann durch ein Gebläse erzeugt werden (nicht dargestellt). Das Gebläse ist bevorzugt nicht am Eintritt der Anlage angebracht, sondern nach den Betten oder zwischen den Schaltventilen angeordnet was ermöglicht, bei giftigen Stoffen die gesamte Anlage unter Unterdruck zu setzen.

Der Aufbau des Pufferbehälters und die Konstruktion des Schaltsystems 205 können von einem Fachmann unter Berücksichtigung der speziellen Ausführungsform der Vorrichtung geeignet gewählt werden.

Im Betrieb der Vorrichtung sind zunächst die Schalter 201 und 204 geöffnet und Schalter 205 so geschaltet, daß das von der regenerativen Nachverbrennung über das Bett 207 kommende Gas direkt über die Ableitung 212 abgeleitet wird. Nach einer Schaltperiode werden zunächst die Schalter 201 und 204 geschlossen und die Schalter 202 und 203 geöffnet, wodurch der Fluß des Eintrittsgases durch die regenerative Nachverbrennung umgekehrt wird und nunmehr über das Bett 206 austritt. Der Schalter 205 wird ebenfalls geschaltet und leitet für einen vorbestimmten Zeitraum, der für eine Ableitung des Totvolumens ausreicht, das austretende Gas über die Leitung 211 dem eintretenden Gas 200 zu, wobei der Pufferbehälter 210 überschüssiges Gas aufnimmt. Dieses Gas wird von dem Pufferbehälter 210 über die Ableitung 211 ebenfalls wieder dem Ausgangsfluid 200 zugeführt. Nach einer vorbestimmten Zeitdauer, wenn das Austrittsgas einen entsprechenden Reinheitsgrad aufweist, wird der Schalter 205 so geschaltet, daß das Austrittsgas wieder direkt über die Leitung 212 abgeleitet wird. Nach einer weiteren Schaltperiode wiederholt sich dieser Vorgang. Die Ableitung 213 dient dazu, dem System Reingas zuzuführen und Druckspitzen abzubauen. Der Puffer ist bevorzugt ebenfalls im leichten Unterdruck zur Ableitung 213. Der Pufferbehälter kann ebenfalls; in dem Abzugskamin integriert sein, wie es in der EP-A 587 064 gezeigt ist.

Mit einem solchen Zweibettverfahren mit Puffer kann die gleiche Reinigungsleistung erzielt werden wie mit den üblichen Dreibettverfahren. Gegenuber den üblichen Dreibettverfahren ergibt sich jedoch der Vorteil, daß der Platzbedarf für ein vollständiges drittes Bett entfällt, und es wird statt dessen nur der Platz für den wesentlich kleineren Pufferbehälter 210 benötigt, der sicherstellt, daß kein verunreinigtes Gas aus dem Totvolumen in die Abluft gelangt. Dieser Pufferbehälter 210 kann wesentlich kleiner dimensioniert sein als ein drittes Bett 112.

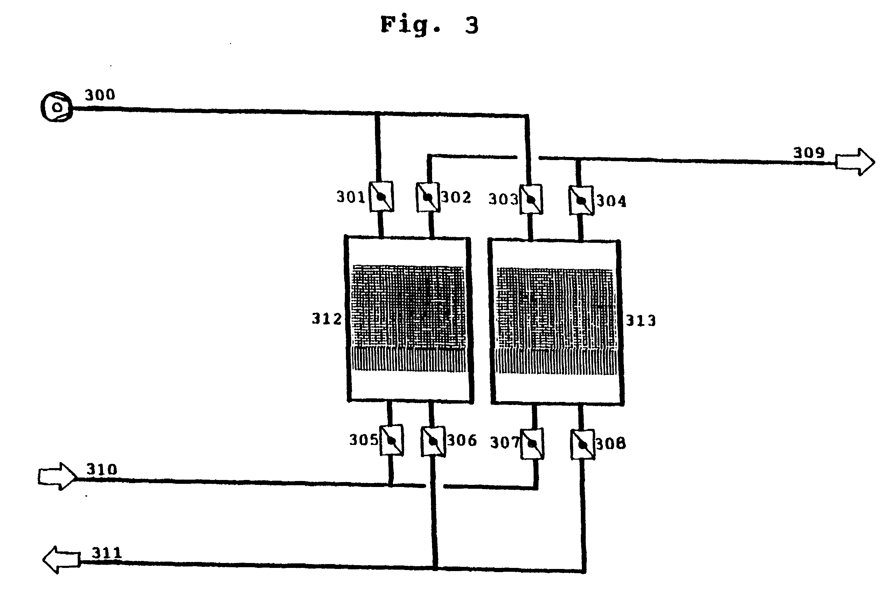

In Figur 3 ist schematisch ein regenerativer Wärmetauscher des Standes der Technik dargestellt, der vier Klappen an jeder Seite der wabenförmigen Wärmetauscher aufweist. In Figur 3 bedeuten die Bezugszeichen 301 bis 308 die acht Klappen, 312 und 313 stellen die Wärmetauscher dar. Die Verbrennungsluft tritt über 300 ein, wird über 311 zum Verbrennungsofen geleitet, über 310 vom Verbrennungsofen weg und über 309 abgeleitet. Hierbei ist noch nachteilig, daß acht Klappen und eine entsprechende Steuerungselektronik benötigt werden.

Beim Umlenken von Gasströmen durch herkömmliche Klappen oder Ventile, insbesondere bei schnell schaltenden Klappen und Ventilen, wie sie zum Beispiel bei der regenerativen Nachverbrennung üblicherweise verwendet werden, können auch erhebliche Druckspitzen auftreten, insbesondere wenn (z.B. bei aufwendigen Schaltungen) die Steuerungselektronik nicht genau abgestimmt ist oder die Anlage längere Zeit in Betrieb ist. Solche Druckspitzen ziehen Ausgleichsströmungen nach sich und können die nachgeschalteten Reaktoren, Wärmetauscher, Adsorber und/oder Absorber beschädigen. Besonders unerwünscht sind solche Druckspitzen bei der Produktion empfindlicher Waren, deren Produktionsabgase durch eine regenerative Nachverbrennung gereinigt werden müssen, da eine Beschädigung der empfindlichen Waren durch das Auftreten der Druckspitzen nicht zuverlässig ausgeschlossen werden kann.

Erfindungsgemäß stellt sich daher die Aufgabe, schaltbare Verteiler für Fluide, insbesondere für Gase zur Verfügung zu stellen, die bei instationären Prozessen in Anlagen zum Trocknen und Adsorbieren, Druckwechseladsorptionsanlagen, Anlagen zur thermischen Nachverbrennung oder Absorptions/Desorptionsanlagen eingesetzt werden können und eine wesentlich einfachere Durchführung solcher Prozesse ermöglichen. Sie sollen sowohl bei ihrem Einsatz als auch in ihrer Herstellung deutlich kostengünstiger und zuverlässiger sein (geringere Fehleranfälligkeit) als die schaltbaren Verteiler, Ventile und Klappen des Standes der Technik. Die erfindungsgemäß einsetzbaren Verteiler für Fluide sollen den Schaltungsaufwand besonders bei Dreibettanlagen verringern, insbesondere aber auch in einem Zweibettverfahren zur thermischen Nachverbrennung verwendbar sein, das bei einem verringerten Platzbedarf und deutlich vereinfachter Schaltung und Steuerung im wesentlichen den gleichen Reinigungswirkungsgrad aufweist, wie eine Dreibettanlage des Standes der Technik. Es sollte ferner gewährleistet sein, daß sich bestehende Zweibettanlagen kostengünstig und ohne unzumutbaren Aufwand zu einer Dreibettanlage oder einer Zweibettanlage mit Puffer nachrüsten lassen.

Eine weitere erfindungsgemäße Aufgabe ist es auch, einen schaltbaren Verteiler für Fluide, insbesondere Gase, zur Verfügung zu stellen, bei dessen Verwendung in Anlagen zum Trocknen und Absorbieren, Druckwechseladsorptionsanlagen, Anlagen zur thermischen Nachverbrennung oder Absorptions/Desorptionsanlagen das Auftreten von schädlichen Druckspitzen vermieden wird.

Auch ist man bei herkömmlichen Fluidverteilern auf maximal vier Wege eingeschränkt. Zwar sind theoretisch konventionelle Verteiler mit mehr als vier Wegen denkbar, jedoch technisch derart schwierig herzustellen, daß im Handel zur Fluidsteuerung allenfalls Vierwegeverteiler erhältlich sind. Werden Ventile oder Klappen verwendet, kann im Prinzip eine Verteilung auf mehrere Wege erfolgen, jedoch wird der Anlagenaufbau und die Ansteuerungselektronik dann ausgesprochen komplex und fehleranfällig, wie vorstehend ausgeführt. Bei der regenerativen Nachverbrennung, aber auch bei vielen weiteren Anwendungen ist jedoch eine Verteilung auf mehr als vier Wege wünschenswert. Daher ist es eine weitere erfindungsgemäße Aufgabe, schaltbare Verteiler für Fluide, insbesondere Gase zur Verfügung zu stellen, die ohne übermäßigen konstruktionellen Aufwand und ohne eine komplexe Ansteuerungselektronik beliebig viele Schaltwege schließen bzw. öffnen können, wie es in Anlagen zum Trocknen und adsorbieren, Druckwechseladsorptionsanlagen, Anlagen zur thermischen Nachverbrennung oder Absorptions/Desorptionsanlagen und insbesondere bei der regenerativen Nachverbrennung erforderlich ist.

Ferner sollen die erfindungsgemäß einsetzbaren Schalter möglichst breit einsetzbar sein und beliebige Schaltcharakteristika zur Verfügung stellen.

Diese Aufgaben werden durch den Gegenstand der Patentansprüche gelöst.

Der erfindungsgemäß einsetzbare schaltbare Verteiler für Fluide sowie die Vorteile, die sich bei seiner Verwendung insbesondere bei instationären Prozessen ergeben, werden nachstehend unter Bezugnahme auf spezielle Ausgestaltungen des erfindungsgemäß einsetzbaren schaltbaren Verteilers für Fluide näher erläutert.

Figur 1 zeigt schematisch den Aufbau einer Dreibettanlage zur regenerativen Nachverbrennung, wie sie im Stand der Technik bekannt ist.

Figur 2 zeigt schematisch eine Zweibettanlage mit Puffersystem unter Verwendung herkömmlicher Ventile oder Klappen in allgemeiner Form.

Figur 3 zeigt schematisch eine Ausführungsform eines regenerativen Wärmetauschers nach dem Stand der Technik, bei dem die Schaltung der Fluide über acht Klappen erfolgt.

Figur 4 zeigt schematisch geschnitten (Längsschnitt) einen erfindungsgemäß einsetzbaren schaltbaren Verteiler für Fluide in seiner einfachsten Ausführungsform.

Figur 5 zeigt bevorzugte Ausführungsformen der Abschlußplatte des erfindungsgemäß einsetzbaren schaltbaren Verteilers für Fluide, wie er in Figur 4 dargestellt ist.

Figur 6 zeigt schematisch eine Vorrichtung zur Durchführung eines beliebigen instationären Prozesses unter Verwendung der erfindungsgemäß einsetzbaren schaltbaren Verteiler für Fluide in ihrer einfachsten Ausführungsform.

Figur 7 zeigt schematisch eine besonders bevorzugte Ausführungsform der Erfindung, bei der eine Vorrichtung zur Durchführung eines instationären Prozesses mit einem Puffer und mit erfindungsgemäß einsetzbaren schaltbaren Verteilern für Fluide ausgerüstet ist und weiterhin einen speziell ausgestalteten dritten Schalter aufweist.

Figur 8 zeigt schematisch die am meisten bevorzugte Ausführungsform der Erfindung und entspricht Figur 7, in der der instationäre Prozeß eine thermische Nachverbrennung und die Vorrichtung eine Zweibettanlage mit Puffer ist.

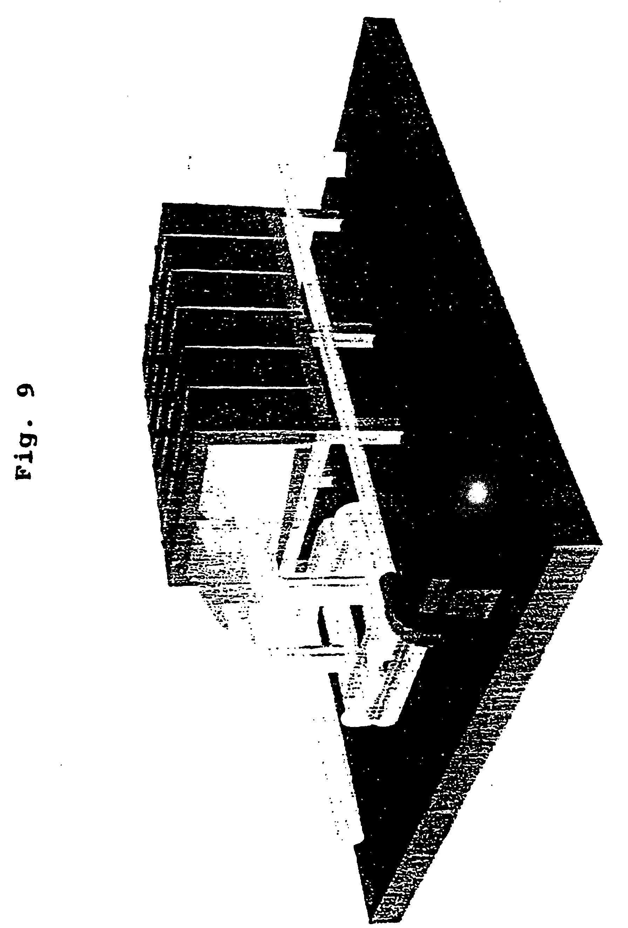

Figur 9 zeigt in dreidimensionaler Darstellung eine Vorrichtung zur regenerativen Nachverbrennung mit einem Zweibettsystem mit dem unkomplizierten Leitungsaufbau, wie er bei Verwendung der erfindungsgemäß eingesetzten schaltbaren Verteiler für Fluide möglich ist.

Figur 10 zeigt schematisch zwei erfindungsgemäß einsetzbare schaltbare Verteiler für Fluide in ihrer einfachsten Ausführungsform in serieller Anordnung.

Figur 11 zeigt schematisch geschnitten (Längsschnitt) mehrere erfindungsgemäß einsetzbare schaltbare Verteiler für Fluide, die mehr als eine Abschlußplatte, und drei Anschlüsse aufweisen.

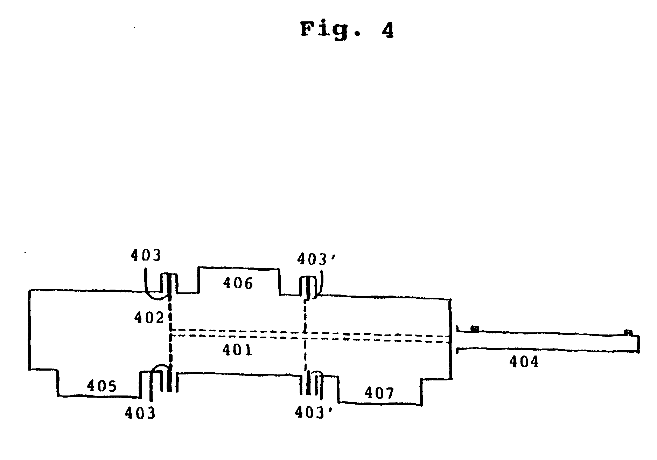

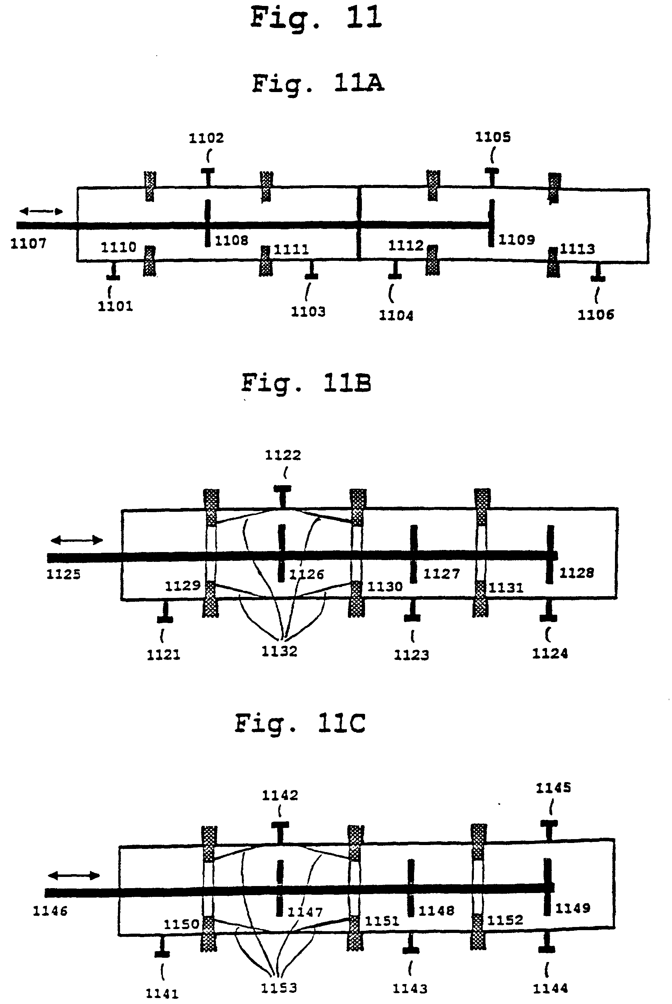

In Figur 4 wird ein erfindungsgemäß einsetzbarer schaltbarer Verteiler für Fluide in seiner einfachsten Ausführungsform dargestellt mit drei Anschlüssen 405, 406 und 407. Die Geometrie der Abschlußplatte 402 ist derart auf die Dichtungen 403, 403' abgestimmt, daß beim Anpressen an eine Dichtung 403, 403' der zugehörige Fluidweg zuverlässig gesperrt bzw. das Fluid in der gewünschten Richtung abgeleitet wird. In der hier gewählten Darstellung dichtet die Abschlußplatte 402 an der Dichtung 403 ab und ein über den Anschluß 406 eintretendes Fluid wird über den Anschluß 407 abgeleitet. Zum Umschalten des Fluids wird dann die Abschlußplatte 402 über den Schieber 401 in Längsrichtung zur zweiten Dichtung 403' verschoben. Diese Stellung der Abschlußplatte 402 ist in Figur 4 dünn gestrichelt angedeutet. Das Verschieben kann durch an sich bekannte Vorrichtungen 404 wie pneumatische Zylinder oder, bei größeren Ausführungsformen, hydraulische Zylinder erfolgen. Nach Abschluß des Schaltvorgangs dichtet die Abschlußplatte 402 an der zweiten Dichtung 403' zuverlässig ab und leitet das Fluid dann über den vorher abgeschlossenen Anschluß 405 ab. Indem man weitere Anschlüsse bzw. Abschlußplatten und Dichtungen vorsieht, wie es in Figur 11 gezeigt ist, können gleichzeitig synchron weitere Gasströme geschaltet werden und der Leitungsaufbau entsprechend vereinfacht werden.

Der in Figur 4 gezeigte Körper des schaltbaren Verteilers für Fluide kann beispielsweise aus drei geeignet zusammengesetzten und mit Dichtungen versehenen üblichen Rohr-T-Stücken bestehen, die gegebenenfalls von einem Durchschnittsfachmann für den hier beschriebenen schaltbaren Verteiler für Fluide entsprechend angepaßt wurden.

Bei einem Einsatz in einem regenerativen Wärmetauscher, wie er in Figur 3 dargestellt und vorstehend beschrieben ist, benötigt man erfindungsgemäß statt der acht Klappen nur zwei entsprechend ausgestaltete erfindungsgemäß einsetzbare schaltbare Verteiler für Fluide. Zudem fällt noch die aufwendige Elektronik für eine synchrone Schaltung der Ventile weg, da in dem erfindungsgemäß einsetzbaren Verteiler eine synchrone Schaltung der Gasströme dadurch sichergestellt wird, daß zwei oder mehrere Abschlußplatten an einer einzigen Verschiebestange befestigt sind und synchron mit dieser Verschiebestange bewegt werden.

Entsprechend ist es auch möglich, mehrere erfindungsgemäß einsetzbare schaltbare Verteiler für Fluide über einen einzigen pneumatischen oder hydraulischen Zylinder zu betreiben, was einer Anordnung entspricht, bei der statt zweier erfindungsgemäß einsetzbarer schaltbarer Verteiler für Fluide nur ein entsprechend dimensionierter schaltbarer Verteiler für Fluide eingesetzt wird. Durch diese Ausführungsform der erfindungsgemäß einsetzbaren schaltbaren Verteiler für Fluide lassen sich die Schaltung und die Schaltsteuerung noch weiter vereinfachen. Eine entsprechende Ausführungsform eines schaltbaren Verteilers für Fluide ist in Figur 11A schematisch dargestellt.

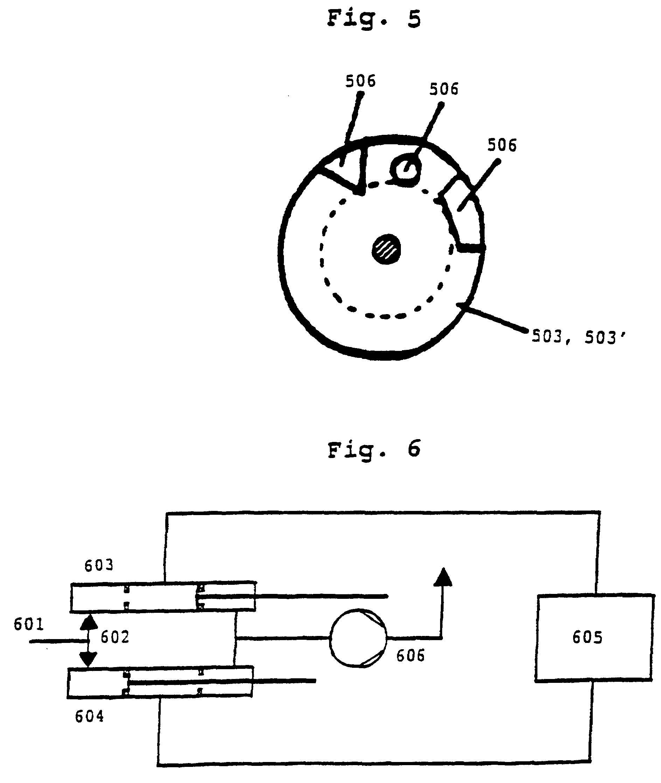

In einer besonders bevorzugten Ausführungsform ist die Geometrie der Abschlußplatten 402 derart, daß beim Verfahren der Abschlußplatte ein Umströmen durch das Fluid ermöglicht wird. Ein erfindungsgemäß einsetzbarer schaltbarer Verteiler für Fluide mit einer derartigen Abschlußplatte 402 ist ebenfalls Gegenstand der Erfindung. Eine vollständige Abdichtung erfolgt erst, wenn die Abschlußplatte an eine Dichtung angepreßt wird. Dies kann entweder dadurch erreicht werden, daß die Abschlußplatte geringere Abmessungen als das Gehäuse hat und beispielsweise im Fall von Zylindergeometrie einen geringeren Durchmesser aufweist als das zylinderförmige Gehäuse und damit beim Verfahren nicht an der Innenwand des Gehäuses anliegt. In diesem Fall muß allerdings sichergestellt werden, daß der Schieber waagerecht verläuft und die Abschlußplatte beim Verfahren nicht verkantet. Dies kann auf im Stand der Technik bekannte Art und Weise geschehen, z.B. indem eine Führungsplatte an dem Schieber angebracht wird. Ein Umströmen der Abschlußplatte beim Verfahren kann aber auch dadurch erreicht werden, daß in der Abschlußplatte Bohrungen oder Aussparungen 506, wie sie in Figur 5 gezeigt sind, vorgesehen werden, die nach Anpressen an die Dichtung 503,503' durch die Dichtung abgeschlossen werden.

Diese besondere Geometrie der Abschlußplatte verhindert das Auftreten von Druckspitzen während des Schaltvorganges (Verfahren der Abschlußplatte), da möglicherweise entstehender Druck direkt über die Abschlußplatte abgebaut wird. Ferner wird hierdurch die Energie, die zum Verfahren der Abschlußplatte notwendig ist, drastisch reduziert.

In Figur 6 ist eine erfindungsgemäße Vorrichtung zur Durchführung eines instationären Prozesses, die die schaltbaren Verteiler für Fluide in ihrer einfachsten Ausführungsform einsetzt, schematisch dargestellt. Eine solche Vorrichtung besteht aus zumindest zwei schaltbaren Verteilern für Fluide 603, 604 (in Figur 6 parallel geschaltet) sowie zumindest einem instationär arbeitenden Reaktor, Wärmetauscher, Adsorber und/oder Absorber 605. Das Fluid 601 wird beispielsweise über ein T-Stück 602 an die beiden schaltbaren Verteiler für Fluide geleitet. In Figur 6 ist Verteiler 604 auf geschlossen geschaltet, während Verteiler 603 offen geschaltet ist. Das Gas wird also über Verteiler 603 zu dem instationären Prozeß 605 geleitet (Reaktor, Wärmetauscher, Adsorber und/oder Absorber). Von dort fließt das Fluid zu dem schaltbaren Verteiler 604, der in der dargestellten Schaltstellung so geschaltet ist, daß das Fluid über 606 abgeleitet wird. Nach einer Schaltperiode werden die Schieber mit den Abschlußplatten in den Verteilern 603 und 604 so verschoben, daß nunmehr das eintretende Fluid nicht mehr in den Fluidverteiler 603 einfließen kann, sondern über den Fluidverteiler 604 zu dem instationär arbeitenden Prozeß 605 geleitet wird und von dort über den Fluidverteiler 603 und die Ableitung 606 abgeleitet wird.

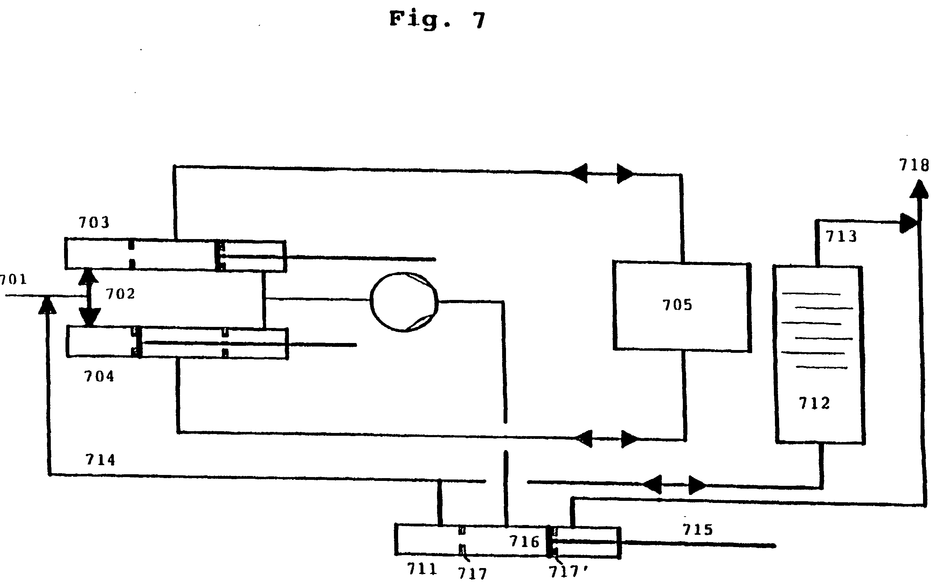

Eine besonders bevorzugte Ausführungsform der Erfindung ist in Figur 7 dargestellt. In der hier gezeigten Vorrichtung zur Durchführung eines instationären Prozesses ist ein dritter Schalter 711 und ein Pufferbehälter 712 vorhanden. Der dritte Schalter 711 kann ein beliebiges Schalt- oder Ventilsystem nach dem Stand der Technik sein, in Figur 7 ist jedoch ein erfindungsgemäß einsetzbarer schaltbarer Verteiler für Fluide gezeigt. Der Pufferbehälter ist derart ausgestaltet, daß er das während des Schaltvorganges auftretende Totvolumen aufnehmen und geeignet weiterleiten kann, beispielsweise über die Ableitung 714 wieder in den Eintrittsstrom 701. Besonders bevorzugt handelt es sich auch bei dem dritten Schalter 711 um einen erfindungsgemäßen schaltbaren Verteiler für Fluide, bei der ein in Längsrichtung verschiebbarer Schieber 715 mit einer Abschlußplatte 716, die gegebenenfalls eine derart ausgestaltete Geometrie aufweist, daß Bohrungen oder Ausschnitte an der Abschlußplatte beim Fahren der Abschlußplatte ein Umströmen ermöglichen, die Abschlußplatte gegen eine Dichtung 717, 717' preßt, wodurch die Bohrungen oder Ausschnitte geeignet verschlossen werden.

In einem Aufbau, wie er in Figur 7 gezeigt ist, werden Druckspitzen allerdings schon vermieden, da unabhängig vom Schaltvorgang immer zumindest ein Gasweg offen ist. Hier kann es daher vorteilhaft sein, die Geometrie der Abschlußplatten 702 bzw. 716 so zu wählen, daß während des Verfahrens kein oder nur ein geringes Umströmen möglich ist. Die Konstruktion des Pufferbehälters 712 bzw. des zusätzlichen Schalters 711 kann von dem Fachmann in Abhängigkeit des jeweils bevorzugten Verwendungszweckes angepaßt werden. Die Ableitung 718 geht zum Kamin, der für leichten Unterdruck im gesamten System sorgt (Kaminzug, bei geringerer Dichte des austretenden Gases im Vergleich zum Atmosphärengas).

Die vorstehend beschriebene, besonders bevorzugte, Ausführungsform ist beispielsweise verwirklicht, wenn die erfindungsgemäß einsetzbaren schaltbaren Verteiler für Fluide in einem Verfahren zur regenerativen Nachverbrennung eingesetzt werden.

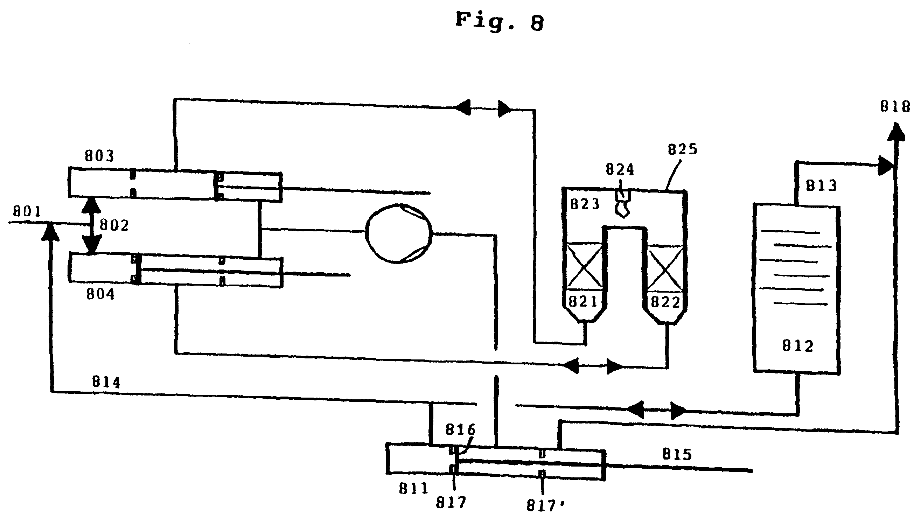

Diese am meisten bevorzugten Ausführungsform der vorliegenden Erfindung wird nunmehr unter Bezug auf Figur 8 beschrieben. Figur 8 zeigt schematisch eine Vorrichtung zur regenerativen Nachverbrennung, die als Zweibettanlage mit Pufferbehälter und den erfindungsgemäß einsetzbaren schaltbaren Verteilern für Fluide ausgestattet ist. Insoweit entspricht die Vorrichtung in Figur 8 der Vorrichtung in Figur 7, bei der der instationäre Prozeß 705 eine Zweibettanlage zur regenerativen Nachverbrennung mit Pufferbehälter darstellt oder der in Figur 2 dargestellten Vorrichtung, bei der die dort gemäß dem Stand der Technik verwendeten Ventile oder Klappen durch die erfindungsgemäß einsetzbaren schaltbaren Verteiler für Fluide ersetzt sind. In der Vorrichtung sind die erfindungsgemäß einsetzbaren schaltbaren Verteiler für Fluide 803 und 804 zur Schaltung und Verteilung der ein- und austretenden Gasströme vorgesehen. Die Zweibettanlage 825 weist die Betten 821 und 822 sowie den Brennerraum 823 und den Brenner 824 auf. Zusätzlich ist noch ein weiteres Schaltsystem 811 vorhanden, bei dem es sich ebenfalls bevorzugt um einen erfindungsgemäß einsetzbaren schaltbaren Verteiler für Fluide handelt. Der Schalter 811 kann das austretende Gas entweder direkt über die Leitung 818 ableiten oder zu einem Pufferbehälter 812 leiten, der eine Ableitung 813 und eine Ableitung 814 aufweist, die zum Eintrittsgas 801 führt. Der Pufferbehälter ist gegenüber der Austrittsleitung 818 vorzugsweise in leichtem Unterdruck und weist bevorzugt spezielle Vorrichtungen, z.B. Schikanen, auf, die eine Rückvermischung mit dem Reingas vermindern sollen. Der leichte Unterdruck in dem Pufferbehälter 812 kann durch ein Gebläse erzeugt werden. Das Gebläse ist bevorzugt nicht am Eintritt der Anlage angebracht, sondern nach den Betten oder zwischen den Schaltventilen angeordnet, was ermöglicht, bei giftigen Stoffen die gesamte Anlage unter Unterdruck zu setzen. Der Aufbau des Pufferbehälters und die Konstruktion des Schaltsystems 811 können von einem Fachmann unter Berücksichtigung der speziellen Ausführungsform der erfindungsgemäßen Vorrichtung geeignet gewählt werden. Bei dem Schaltsystem 811 handelt es sich bevorzugt um einen erfindungsgemäß einsetzbaren schaltbaren Verteiler für Fluide wie er in Figur 4 gezeigt ist. Der Pufferbehälter kann ebenfalls in dem Abzugskamin integriert sein, wie es in der EP-A 587 064 gezeigt ist.

Im Betrieb der Vorrichtung ist zunächst der Schalter 803 so geschaltet, daß das eintretende Gas 801 über die Verzweigung (bevorzugt ein T-Stück) 802 und das Bett 821 in den Brennerraum 823 geleitet wird, in dem die regenerative Nachverbrennung erfolgt. Das heiße, gereinigte Gas wird dann über das Bett 822 abgeleitet, wodurch das Bett 822 aufgeheizt und das gereinigte Gas abgekühlt wird. Das abgekühlte, gereinigte Gas wird dann zu dem Schalter 804 geleitet, der so geschaltet ist, daß das eintretende Gas 801 nicht eintreten kann und das gereinigte vom Bett 822 kommende Gas zu dem Schalter 811 geleitet wird. Der Schalter 811 ist so geschaltet, daß das eintretende, gereinigte Gas direkt über die Ableitung 818 nach außen geleitet wird. Nach einer Schaltperiode wird der Schalter 803 so geschaltet, daß das eintretende Gas 801 nicht mehr eintreten kann und der Schalter 804 so geschaltet, daß das eintretende Gas 801 über den Verteiler (bevorzugt T-Stück) 802 auf das vorgeheizte Bett 822 geleitet wird. Hier wird das Gas aufgeheizt und in dem Brennerraum 823 nachverbrannt. Das gereinigte Gas wird dann über das Bett 821 auf den Schalter 803 geleitet, der nunmehr so geschaltet ist, daß das Gas weiter zum Schalter 811 gelangt. Da das gereinigte Gas zunächst noch Rückstände aus dem Bett 821 enthält, ist der Schalter 811 nun so geschaltet, daß das noch Rückstände enthaltende Gas nicht direkt in die Austrittsleitung 818 gelangt, sondern über die Ableitung 814 dem Eintrittsgas zugeführt wird bzw. in den Pufferbehälter 812 gelangt. Nachdem das aus dem Bett 821 austretende Gas eine genügende Reinheit aufweist (die Verunreinigungen aus dem Bett 821 entfernt sind) wird der Schalter 811 so geschaltet, daß das über den Schalter 803 eintretende Gas nunmehr direkt über die Außenleitung 818 abgeleitet wird. Nach einer weiteren Schaltperiode werden die Schalter 803, 804 und 811 wieder entsprechend umgeschaltet, wobei das nunmehr über das Bett 822 abfließende, gereinigte Gas solange es noch Verunreinigungen enthält wieder zunächst dem Eintrittsgas bzw. dem Pufferbehälter zugeleitet und sodann dem Austrittsgas 818 zugeleitet wird. Anschließend erfolgt der Schaltzyklus von neuem.

Auch hierbei kann die Abschlußplatte 802 des schaltbaren Verteilers für Fluide wieder geeignete Aussparungen aufweisen, um den Schaltvorgang zu erleichtern. Druckspitzen treten bei dieser besonders bevorzugten Ausführungsform, wie im Zusammenhang mit Figur 7 beschrieben, nicht auf.

Wie klar ersichtlich ist, sind bei einer Zweibettanlage mit Puffer zur regenerativen Nachverbrennung gegenüber einer Vorrichtung des Standes der Technik nur die Hälfte der Schalter notwendig, nämlich statt sechs Klappen nur drei schaltbare Verteiler für Ventile. Durch geeignete Dimensionierung (wie es in Figur 11 dargestellt ist) können z.B. statt zweier schaltbarer Verteiler für Fluide 803 bzw. 804 ein einziger schaltbarer Verteiler für Fluide verwendet werden, was den Schaltungsaufwand nochmals erheblich reduziert und die Schaltgenauigkeit noch weiter steigert.

Selbstverständlich können die erfindungsgemäß einsetzbaren schaltbaren Verteiler für Fluide auch in üblichen Dreibettanlagen eingesetzt werden, was dort ebenfalls zu einer erheblichen Reduzierung der notwendigen Schaltungen mit den bereits beschriebenen Vorteilen führt.

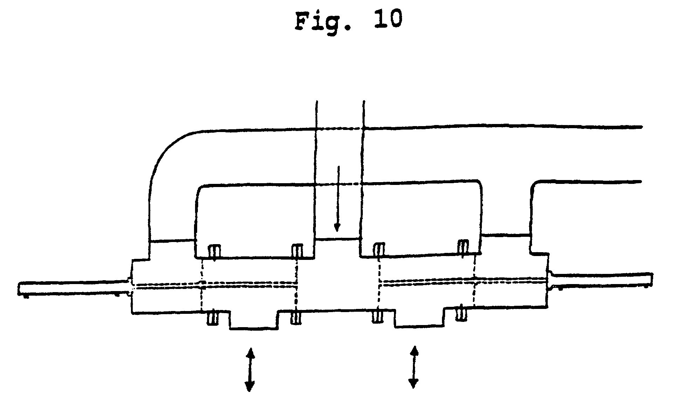

Die erfindungsgemäß einsetzbaren schaltbaren Verteiler können parallel angeordnet werden, wie es in den bisherigen Abbildungen dargestellt ist, oder, wenn es vom zur Verfügung stehenden Platz angebracht erscheint, auch in Serie geschaltet werden, wie es in Figur 10 gezeigt ist. In beiden Fällen ist es möglich, beliebig viele Schaltvorgänge gleichzeitig auszuführen, indem mehr als drei Anschlüsse und mehr als eine Abschlußplatte verwendet werden. Die Zahl der Dichtungen wird entsprechend angepaßt.

In Figur 11 sind mehrere Ausführungsformen der erfindungsgemäß einsetzbaren schaltbaren Verteiler für Fluide schematisch im Längsschnitt dargestellt, die mehr als eine Abschlußplatte, drei Anschlüsse und zwei Dichtungen aufweisen.

Figur 11A zeigt eine Ausführungsform der erfindungsgemäß einsetzbaren schaltbaren Verteiler für Fluide schematisch im Längsschnitt, in der zwei schaltbare Verteiler für Fluide, wie sie in Figur 4 gezeigt sind, hintereinander angeordnet und durch einen einzigen Schieber 1107 betreiben werden. Hierdurch wird ohne komplexen Schaltungsaufwand ein synchrones Schalten von Fluidströmen sichergestellt und der Leitungsaufbau komplexer Vorrichtungen erheblich vereinfacht. In der hier gezeigten Schalterstellung sind alle Fluidwege offen, das heißt, das über den Anschluß 1102 eintretende Fluid kann über den Anschluß 1101 und den Anschluß 1103 abfließen und das über den Anschluß 1105 eintretende Fluid kann über den Anschluß 1104 und den Anschluß 1106 austreten: Wird der Schieber 1107 nach links geschoben, so daß die Abschußplatte 1108 an der Dichtung 1110 anliegt und die Abschlußplatte 1109 an der Dichtung 1112 anliegt, sind die Anschlüsse 1101 bzw. 1104 abgedichtet und ein über den Anschluß 1102 eintretendes Gas wird über den Anschluß 1103 abgeleitet und ein über den Anschluß 1105 eintretendes Gas wird über den Anschluß 1106 abgeleitet. Zum Umschalten wird der Schieber 1107 dann nach rechts verschoben und die Abschlußplatte 1108 dichtet an der Dichtung 1111 ab und die Abschlußplatte 1109 dichtet an der Dichtung 1113 ab. Das über den Anschluß 1102 eintretende Fluid wird damit über den Anschluß 1101 abgeleitet und das über den Anschluß 1105 eintretende Fluid wird über den Anschluß 1104 abgeleitet.

Die Abschlußplatten 1108 bzw. 1109 können wie in Figur 5 dargestellt ausgestaltet sein.

In Figur 11B wird eine Ausführungsform des erfindungsgemäß einsetzbaren schaltbaren Verteilers für Fluide mit vier Anschlüssen 1121, 1122, 1123 und 1124, drei Abschlußplatten 1126, 1127 und 1128 und drei Dichtungen 1129, 1130 und 1131 schematisch im Längsschnitt dargestellt. In der in Figur 11B dargestellten Schalterstellung kann ein über den Anschluß 1122 eintretendes Gas über alle drei Anschlüsse 1121, 1123 und 1124 abfließen. Wird der Schieber 1125 nach links geschoben, so daß die Abschlußplatte 1126 an der Dichtung 1129 anliegt und diese abdichtet. Bei dieser Schalterstellung liegt auch die Abschlußplatte 1127 an der Dichtung 1130 und die Abschlußplatte 1128 an der Dichtung 1131 an. Das System ist geschlossen und ein Fluidfluß nicht mehr möglich. Wird der Schieber 1125 dagegen nach rechts verschoben, dichtet die Abschlußplatte 1126 an der Dichtung 1130 und die Abschlußplatte 1127 an der Dichtung 1131 ab. In diesem Fall wird ein über den Anschluß 1122 eintretendes Gas zuverlässig über den Anschluß 1121 abgeleitet während die Anschlüsse 1123 und 1124 geschlossen sind.

Fehlt bei der Ausführungsform nach Figur 11B die Abschlußplatte 1127 (nicht gezeigt), so ist ein vollkommener Abschluß aller Gaswege nicht möglich. Wird der Schieber 1125 nach links verschoben, so daß die Abschlußplatte 1126 an der Dichtung 1129 abdichtet, wird ebenfalls der Anschluß 1124 durch die Abschlußplatte 1128, die an der Dichtung 1131 anliegt, abgedichtet. Ein über den Anschluß 1122 eintretendes Fluid wird dann ausschließlich über den Anschluß 1123 abgeleitet. Wird der Schieber nach rechts verschoben, so daß die Abschlußplatten 1126 und 1128 nicht an die Dichtungen 1129 und 1131 anliegen, sind alle Anschlüsse frei, und ein über den Anschluß 1122 eintretendes Fluid kann sowohl über den Anschluß 1121 als auch über den Anschluß 1123 und 1124 abfließen. Wird der Schieber 1125 noch weiter nach rechts verschoben, dichtet die Abschlußplatte 1126 an der Dichtung 1130 ab und ein über den Anschluß 1122 eintretendes Fluid kann nur über den Anschluß 1121 abfließen.

Ein erfindungsgemäß einsetzbarer schaltbarer Verteiler für Fluide kann ebenfalls geeignete Einbauten 1132, wie Hülsen, aufweisen, die eine Regelung eines eintretenden Fluidstroms ermöglichen. In der in Figur 11B dargestellten Schalterstellung wird ein über den Anschluß 1122 eintretendes Fluid zu gleichen Teilen auf die Anschlüsse 1121 und 1123/1124 geleitet. Bei einer Verschiebung der Abschlußplatte 1126 nach links wird durch die Einbauten 1132 der Durchgangsweg für das Fluid zum Anschluß 1121 kontinuierlich verringert, bis der Fluidweg zum Anschluß 1121 ganz geschlossen wird, wenn die Abschlußplatte 1126 an der Dichtung 1129 anliegt. Durch eine geeignete Stellung der Abschlußplatte 1126 zwischen der in Figur 11B gezeigten Stellung und dem Abdichten an der Dichtung 1129 kann das am Anschluß 1122 eintretende Fluid so geregelt werden, daß ein kleiner Anteil über den Anschluß 1121 abfließt und ein größerer Anteil zu den Anschlüssen 1123 und 1124 geleitet wird. Durch entsprechendes Verschieben der Abschlußplatte 1126 aus der in Figur 11B gezeigten Stellung nach rechts kann der bei Anschluß 1122 eintretende Fluidstrom so geregelt werden, daß der größte Teil des Fluids über den Anschluß 1121 abfließt und ein geringerer Teil des Fluids über die Anschlüsse 1123 bzw. 1124 abfließt.

Entsprechende Einbauten können selbstverständlich auch an anderen Stellen des erfindungsgemäß einsetzbaren schaltbaren Verteilers für Fluide, wie er in Figur 11B gezeigt ist, vorgesehen werden oder bei anderen Ausführungsformen des erfindungsgemäß einsetzbaren schaltbaren Verteilers für Fluide eingesetzt werden.

In Figur 11C wird schematisch im Längsschnitt eine Ausführungsform des erfindungsgemäß einsetzbaren schaltbaren Verteilers für Fluide mit drei Abschlußplatten 1147, 1148 und 1149, drei Dichtungen 1150, 1151 und 1152 und fünf Anschlüssen 1141, 1142, 1143, 1144 und 1145 gezeigt. Ein derartiger Schalter kann beispielsweise vorteilhaft eingesetzt werden, wenn eine geringe Menge eines Zweitgäses einem Hauptgasstrom zugesetzt werden soll. Beispielsweise wird der Hauptgasstrom über den Anschluß 1142 eingeleitet während das Zweitgas über den Anschluß 1145 eingeleitet wird. In der in Figur 11C dargestellten Schalterstellung fließt das über den Anschluß 1142 eintretende Hauptgas im wesentlichen über die Anschlüsse 1141 und 1143 ab und das über den Anschluß 1145 eintretende Zweitgas fließt über den Anschluß 1144 ab und wird gleichzeitig dem über 1143 abfließenden Hauptgas zugemischt. Wird der Schieber 1146 nach rechts verschoben, ist der Gasweg vom Anschluß 1145 zum Anschluß 1144 noch immer offen, der Anschluß 1143 ist jedoch abgesperrt und das über 1142 eintretende Hauptgas kann nur über den Anschluß 1141 abfließen. Wird der Schieber 1146 nach links geschoben, sind alle Abflüsse für das Hauptgas 1142 geschlossen, das über 1145 eintretende Zweitgas kann jedoch weiterhin noch über den Anschluß 1144 abfließen.

Auch diese Ausführungsform des erfindungsgemäß einsetzbaren schaltbaren Verteilers für Fluide kann von einem Fachmann leicht dadurch abgewandelt werden, daß beispielsweise die Abschlußplatte 1148 weggelassen wird und/oder eine weitere Abschlußplatte links von der Dichtung 1150 vorgesehen wird. Die sich hierdurch ergebenden vielfachen Schaltmöglichkeiten sollen nicht näher ausgeführt werden, sind für den Fachmann jedoch anhand der Figur 11C ohne weiteres ersichtlich.

Die in Figur 11C dargestellte Ausführungsform des erfindungsgemäß einsetzbaren schaltbaren Verteilers für Fluide kann ebenfalls geeignete Einbauten 1153, wie Hülsen, aufweisen, so daß eine Regelung des bei Anschluß 1142 eintretenden Fluidstroms, wie bei Figur 11B beschreiben, möglich ist.

Aus den in Figur 11 dargestellten speziellen Ausführungsformen des erfindungsgemäß einsetzbaren schaltbaren Verteilers für Fluide wird deutlich, daß ein Fachmann die erfindungsgemäß einsetzbaren schaltbaren Verteiler für Fluide ohne weiteres derart ausgestalten kann, daß nahezu jedes Schaltproblem mit ihnen gelöst werden kann. Außer den in Figur 10 und 11 dargestellten speziellen Ausführungsformen der erfindungsgemäß einsetzbaren schaltbaren Verteiler für Fluide und der in Figur 4 dargestellten einfachsten Ausführungsform der erfindungsgemäß einsetzbaren schaltbaren Verteiler für Fluide kann ein Durchschnittsfachmann aufgrund der vorstehenden Offenbarung in Abhängigkeit seines speziellen Schaltproblems ohne weiteres weitere geeignete Ausführungsformen der erfindungsgemäß einsetzbaren schaltbaren Verteiler für Fluide bereitstellen.

Die erfindungsgemäß einsetzbaren Verteiler für Fluide sind besonders zur Verwendung in dem erfindungsgemäßen Verfahren zur regenerativen Nachverbrennung geeignet, können aber in instationär arbeitenden Prozessen in Anlagen zum Trocknen und Absorbieren, Druckwechseladsorptionsanlagen, Anlagen zur thermischen Nachverbrennung oder Absorptions/Desorptionsanlagen eingesetzt werden.

Die erfindungsgemäß einsetzbaren schaltbaren Verteiler können außer in den erfindungsgemäßen Vorrichtungen zur regenerativen Nachverbrennung auch zur Schaltung von Fluiden, vorteilhafterweise Gasen, in instationären Prozessen in Anlagen zum Trocknen und Absorbieren, Druckwechseladsorptionsanlagen, Anlagen zur thermischen, Nachverbrennung oder Absorptions/Desorptionsanlagen verwendet werden. Spezielle Anwendungsmöglichkeiten sind die Reinigung von VOC(volatile organic compounds)-haltigen Abgasen, vorzugsweise der Keramikindustrie, z.B. durch Nachverbrennung, die Reinigung von lösemittelhaltigen Gasen aus Produktionsprozessen (z.B. in der Automobilindustrie oder in Druckereien) durch Nachverbrennung, die Spurenbeseitigung von organischen Säuredämpfen und Nebeln durch Nachverbrennung, die Nachreinigung von Abgasen der Lebensmittelindustrie und die damit verbundene Geruchsstoffvernichtung, die Lösung von Abluftproblemen in der Elektronikindustrie sowie der Papierherstellung, die Verwendung bei Vorrichtungen zum Trocknen und Adsorbieren, z.B. CO₂-Adsorber und die bereits beschriebenen Druckwechseladsorptionsanlagen (PSA) z.B. zur Wasserstoffgewinnung. Insbesondere wenn es um die Beseitigung toxischer Verbindungen oder von Geruchsstoffen geht, wenn also der ungereinigte Abgasanteil eines Prozesses minimiert werden muß, wie in den erfindungsgemäßen Verfahren zur regenerativen Nachverbrennung, sind die erfindungsgemäß einsetzbaren schaltbaren Verteiler von besonderem Vorteil, besonders bei der Verwendung eines Pufferbehälters.

Als weiteres Beispiel für die Verwendung der erfindungsgemäß einsetzbaren schaltbaren Verteiler für Fluide soll noch eine Druckwechseladsorptionsanlage näher beschrieben werden. Die Aufgabe einer Druckwechseladsorptionsanlage ist die Trennung von Gasgemischen wie die Fraktionierung von Raffineriegasen oder die Wasserstoffgewinnung, die Reinigung von Gasen wie z.B. Trocknung oder CO₂-Abtrennung und die Herstellung von angereicherten Gasen z.B. Stickstoff oder Sauerstoff aus der Luft. Bei einer Druckwechseladsorptionsanlage werden die unterschiedlichen Adsorptionseigenschaften der Gaskomponenten ausgenutzt. Adsorptionsfähige Gasarten wie Kohlendioxid aber auch Wasser (bei Trocknern) etc. werden auf der inneren und äußeren Oberfläche bzw. in den Poren des Adsorbens (Molsieb, Zeolithe oder ähnliches) physikalisch gebunden. Dieser Vorgang ist von der Affinität des Gases zur verwendeten Festkörperoberfläche und vom Partialdruck der Komponente abhängig. Je höher (bei gegebener Materialkombination) der Partialdruck ist, desto schneller und desto mehr wird auf der Oberfläche abgelagert. Umgekehrt wird natürlich, da es sich um einen Gleichgewichtsvorgang handelt, bei Absenkung des Partialdrucks eine Desorption stattfinden. Eine Druckwechseladsorptionsanlage (DWA - Druck-Wechsel-Adsorption neuerdings häufig PSA - Pressure-Swing-Adsorption genannt) besteht aus mehreren Behältern, in denen z.B. ein Molsieb als Speicher und Adsorptionsmedium eingefügt wurde. Die Behälter werden durch vielfältige Steuerventile unter Druck mit Gas befüllt, gespült, entspannt, gespült und erneut befüllt. Sie durchlaufen jeweils einen Zyklus, der Adsorption, Entspannung, mehrere Spülvorgänge je nach Erfordernis und Desorption umfaßt. Damit die Gesamtanlage quasi kontinuierlich Gas abnimmt und liefert, werden Batterien von Behältern zusammengeschaltet und über ein ausgefeiltes System zeitversetzt getaktet. Die Anzahl der geschalteten Ventile ist erheblich und der Schaltungsaufwand ebenfalls nicht unbeträchtlich, besonders bei größeren Anlagen mit mehr als drei Behältern. Es ist ohne weiteres ersichtlich, daß der Ersatz der bei Druckwechseladsorptionsanlagen eingesetzten Ventile durch die erfindungsgemäß einsetzbaren schaltbaren Verteiler für Fluide eine erhebliche Reduzierung des Schaltungsaufwands und eine Erleichterung der Schaltsteuerung mit sich bringt.

Während vorstehend insbesondere instationäre Prozesse beschrieben wurden, bei denen die Verwendung des erfindungsgemäßen schaltbaren Verteilers für Fluide besonders vorteilhaft ist, kann der erfindungsgemäße schaltbare Verteiler für Fluide selbstverständlich auch bei stationären Prozessen verwendet werden.

Das folgende spezielle Beispiel erläutert die Erfindung anhand der besonders bevorzugten Ausführungsform, wie sie in Figur 8 gezeigt ist. Es ist nicht einschränkend,.

Der schadstoffhaltige Abgasstrom 801 trifft mit einem Fluß von etwa 20.000 Nm³/hr auf die schaltbaren Verteiler für Fluide 803 und 804. Das Gas hat hier eine Temperatur von etwa 40°C. Es herrscht leichter Unterdruck, und der Druck beträgt etwa 0,98 bar. Die Belastung mit organischen Schadstoffen beträgt etwa 380 mg/Nm³. Die Schalterstellung ist zunächst so, daß das Gas über den Schalter 803 zu dem Bett 821 geleitet wird, dort zunächst erwärmt wird und dann durch Nachverbrennung die organischen Schadstoffe beseitigt werden. Anschließend fließt das Gas über das Bett 822 und über den Schalter 804 zum Schalter 811 und von dort zur Außenluft ab. Hierdurch wird das Bett 822 erwärmt und das Gas abgekühlt. Das abfließende Gas hat einen Fluß von 21.000 Nm³/hr, eine Temperatur von etwa 50°C und einen leichten Unterdruck (Kaminzug). Die Menge an organischen Schadstoffen ist unterhalb der Nachweisgrenze.

Nach einer Schaltperiode werden Schälter 803 und 804 so geschaltet, daß das Gas nunmehr über Schalter 804 zu dem Bett 822 fließt, dort vorgewärmt wird und nach der Nachverbrennung im Brennerraum 823 unter Abkühlung über das Bett 821 und den Schalter 803 abfließt. Nunmehr ist der dritte Schalter 811 so geschaltet, daß das Gas zunächst in den Pufferbehälter 812 fließt beziehungsweise über die Ableitung 814 wieder dem Eintrittsgas zugeführt wird. Nachdem der Pufferbehälter das Totvolumen während des Schaltvorgangs aufgenommen hat und das von der regenerativen Nachverbrennung kommende Austrittsgas eine genügende Reinheit hat wird Schalter 811 so geschaltet, daß das von der regenerativen Nachverbrennung kommende Austrittsgas direkt abgeleitet wird. Der Inhalt des Pufferbehälters fließt über die Leitung 814 dem Eintrittsgas kontinuierlich zu. Der Fluß in der Leitung 814 beträgt in diesem Beispiel etwa 1.000 Nm³/hr, die Temperatur des abgekühlten Gases etwa 40 bis 50°C, es herrscht leichter Unterdruck durch den Zug des Kamins und die organische Schadstoffbelastung direkt nach dem Umschalten beträgt circa etwa 50 mg/Nm³ und fällt später auf die Reingaskonzentration ab. Das in die Atmosphäre abfließende Gas hat einen Fluß von etwa 20.000 Nm³/hr, eine Temperatur von etwa 40 bis 50°C, und leichten Unterdruck durch den Kaminzug und die organischen Reststoffe betragen nicht mehr als der Garantiewert von circa 5 mg/Nm³ und fallen dann wieder unter die Nachweisgrenze. Dies entspricht einer Reinigungsleistung von deutlich mehr als 99,9%. Anschließend erfolgt eine erneute Umschaltung.

## Patentansprüche

1. Verfahren zum Schalten und Verteilen von Fluiden bei instationären Prozessen in Anlagen zum Trocknen und Adsorbieren, Druckwechselladsorptionsanlagen, Anlagen zur thermischen Nachverbrennung oder Absorptions/Desorptionsanlagen, **dadurch gekennzeichnet, daß** die Fluide über zumindest einen schaltbaren Verteiler mit zumindest drei Anschlüssen (405, 406, 407) und zumindest zwei Dichtungen (403, 403') sowie einem Schieber (401) mit zumindest einer Abschlußplatte (402), die mittels des Schiebers (401) in Längsrichtung verschiebbar ist, verteilt werden.

2. Verfahren nach Anspruch 1, wobei der schaltbare Verteiler für Fluide drei Anschlüsse (405, 406, 407) und zwei Dichtungen (403, 403') sowie einen Schieber (401) mit einer Abschlußplatte (402) aufweist.

3. Verfahren nach Anspruch 1 oder 2, **dadurch gekennzeichnet, daß** das Fluid ein Gas ist.

4. Verfahren nach einem der Ansprüche 1 bis 3, **dadurch gekennzeichnet, daß** bei dem schaltbaren Verteiler für Fluide die Abschlußplatte (402) eine geeignet ausgestaltete Geometrie aufweist, so daß Bohrungen oder Ausschnitte (506) an der Abschlußplatte (402) beim Verfahren der Abschlußplatte (402) ein Umströmen ermöglichen und nach dem Anpressen an die Dichtungen (403, 403') verdeckt werden.

5. Verfahren nach einem der Ansprüche 1 bis 4, bei dem ein eintretendes Fluid (601, 701, 801) auf zumindest zwei schaltbare Verteiler (603, 604, 703, 704, 803, 804) wie in einem der Ansprüche 1 bis 4 definiert, geleitet wird, wobei ein schaltbarer Verteiler (603, 703, 803) so geschaltet ist, daß das eintretende Fluid zu einem instationären Prozeß (605, 705, 825) geleitet wird und ein zweiter schaltbarer Verteiler (604, 704, 804) so geschaltet ist, daß er das aus dem instationären Prozeß (605, 705, 825) austretende Fluid wieder aufnimmt und nach der Schaltperiode der zweite schaltbare Verteiler (604, 704, 804) so geschaltet wird, daß er das eintretende Fluid zu dem instationären Prozeß (605, 705, 825) leitet und der erste schaltbare Verteiler (803) so geschaltet wird, daß er das aus dem instationären Prozeß (605, 705, 825) austretende Fluid wieder aufnimmt.

6. Verfahren nach Anspruch 5, bei dem nach Eintreten des Schaltzeitpunktes ein dritter Schalter (711, 811) aktiviert wird, der das Totvolumen während des Schaltvorgangs über einen Puffer (712, 812) mit zumindest zwei Ableitungen (713, 714, 813, 814) ableitet, wobei eine erste Ableitung (713, 813) zu dem Austrittsfluid führt.

7. Verfahren nach Anspruch 6, **dadurch gekennzeichnet, daß** der Puffer (712, 812) im Verhältnis zu dem Druck in der ersten Ableitung (713, 813) unter leichtem Unterdruck gehalten wird.

8. Verfahren nach Anspruch 6 oder 7, **dadurch gekennzeichnet, daß** in den Puffer (712, 812) Schikanen eingebaut sind, die Rückvermischungen mit dem Austrittsfluid verhindern.

9. Verfahren nach einem der Ansprüche 6 bis 8, **dadurch gekennzeichnet, daß** es sich bei dem dritten Schalter (711, 811) um einen schaltbaren Verteiler für Fluide wie in einem der Ansprüche 1 bis 4 definiert handelt.

10. Verfahren nach einem der Ansprüche 1 bis 9, wobei es sich bei dem instationären Prozeß um ein Verfahren zur regenerativen Nachverbrennung schadstoffhaltiger Abgase handelt.

11. Verfahren nach Anspruch 10, bei dem ein schadstoffhaltiges Abgas (801) einer Zweibettanlage zur regenerativen Nachverbrennung (825) zugeführt wird, das gereinigte Abgas über ein Schaltsystem (811) abgeleitet wird und nach jeder Schaltperiode über das Schaltsystem (811) solange über eine zweite Ableitung (814) in das schadstoffhaltige Abgas (801) und einen Puffer (812) geleitet wird, bis das Abgas einen vorgeschriebenen Reinheitsgrad aufweist und anschließend das Schaltsystem (811) so geschaltet wird, daß das von der regenerativen Nachverbrennung stammende Abgas, das die erforderliche Reinheit aufweist, über eine erste Ableitung (818) abgeleitet wird, wobei das in dem Pufferbehälter aufgefangene schadstoffhaltige Gas über die zweite Ableitung (814) weiter dem schadstoffhaltigen Abgas (801) zugeführt wird, wobei es sich bei dem Schaltsystem (811) um einen schaltbaren Verteiler für Fluide handelt, wie er in einem der Ansprüche 1 bis 4 definiert ist.

12. Vorrichtung zur Durchführung des Verfahrens nach einem der Ansprüche 1 bis 11, wobei die Vorrichtung zumindest einen schaltbaren Verteiler für Fluide wie in einem der Ansprüche 1 bis 4 definiert sowie zumindest einen instationär arbeitenden Reaktor, Adsorber und/oder Absorber (605, 705, 825) aufweist.

13. Vorrichtung nach Anspruch 12, die weiterhin zumindest einen Pufferbehälter (712, 812) aufweist.

14. Vorrichtung nach Anspruch 12 oder 13, **dadurch gekennzeichnet, daß** der instationär arbeitende Reaktor, Adsorber und/oder Absorber (605, 705, 825) mit Speichermassen, insbesondere mit Wabenkörpem oder Schüttgut ausgestattet ist.

15. Vorrichtung nach einem der Ansprüche 12 bis 14, wobei es sich um eine Vorrichtung zur regenerativen Nachverbrennung handelt, umfassend eine Zweibettanlage zur regenerativen Nachverbrennung schadstoffhaltiger Abgase, sowie ein Schaltsystem (811), einen Pufferbehälter (812) und eine Ableitung (814) vom Pufferbehälter (812) und dem Schaltsystem (811) zum schadstoffhaltigen Abgas (801), wobei es sich bei dem Schaltsystem (811) um einen schaltbaren Verteiler für Fluide handelt, wie er in einem der Ansprüche 1 bis 4 definiert ist.

16. Schaltbarer Verteiler für das Verteilen von Fluiden bei instationären Prozessen in Anlagen zum Trocknen und Adsorbieren, Druckwechseladsorptionsanlagen, Anlagen zur thermischen Nachverbrennung oder Absorptions/Desorptionsanlagen mit zumindest drei Anschlüssen (405, 406, 407) und zumindest zwei Dichtungen (403, 403') sowie einem Schieber (401) mit zumindest einer Abschlußplatte (402), die mittels des Schiebers (401) in Längsrichtung verschiebbar ist, **dadurch gekennzeichnet, daß** die Abschlußplatte (402) eine geeignet ausgestaltete Geometrie aufweist, so daß Bohrungen oder Ausschnitte (506) an der Abschlußplatte (402) beim Verfahren der Abschlußplatte (402) ein Umströmen ermöglichen und nach dem Anpressen an die Dichtungen (403, 403', 503, 503') verdeckt werden.

## Claims

1. A process for the switching and distribution of fluids in instationary processes in systems for drying and adsorption, pressure-swing-adsorption-systems, systems for thermic afterburning or absorption/desorption-systems, wherein the fluids are distributed over at least one switchable distributor with at least three connections (405, 406, 407) and at least two sealings (403, 403') as well as a translating part (401) with at least one closing plate (402), which can be moved lengthwise with the translating part (401).

2. A process according to claim 1, wherein the switchable distributor for fluids has three connections (405, 406, 407) and two sealings (403, 403') as well as a translating part (401) with a closing plate (402).

3. A process according to claim 1 or 2, wherein the fluid is a gas.

4. A process according to any one of claims 1 to 3, wherein in the switchable distributor for fluids the closing plate (402) has a geometry which is adapted so that holes or cuttings (506) in the closing plate (402) allow for a bypass flow while the closing plate (402) is moved and are covered when the closing plate (402) is pressed against the sealings (403, 403').

5. A process according to any one of claims 1 to 4, wherein an incoming fluid (601, 701, 801) is directed to at least two switchable distributors (603, 604, 703, 704, 803, 804) as defined in any one of claims 1 to 4, wherein one switchable distributor (603, 703, 803) is switched in order to direct the incoming fluid to an instationary process (605, 705, 825) and a second switchable distributor (604, 704, 804) is switched in order to receive the fluid coming from the instationary process (605, 705, 825), and after the switching period the second switchable distributor (604, 704, 804) is switched in order to direct the incoming fluid to the instationary process (605, 705, 825) and the first switchable distributor (803) is switched in order to receive the fluid coming from the instationary process (605, 705, 825).

6. A process according to claim 5, wherein after reaching the switching time a third switching device (711, 811) is activated, which directs the remaining volume of the switch-over action to a buffer (712, 812) with at least two lines (713, 714, 813, 814), with the first line (713, 813) leading to the outlet fluid.

7. A process according to claim 6, wherein the buffer (712, 812) is kept under slightly lower pressure compared to the pressure in the first line (713, 813).

8. A process according to claim 6 or 7, wherein the buffer (712, 812) is equipped with baffles to prevent backmixing with the outlet fluid.

9. A process according to any one of claims 6 to 8, wherein the third switching device (711, 811) is a switchable distributor for fluids as defined in any one of claims 1 to 4.

10. A process according to any one of claims 1 to 9, wherein the instationary process is a process for regenerative afterbuming of polluted exhaust gases.

11. A process according to claim 10, wherein a polluted exhaust gas (801) is fed to a two-bed system for regenerative afterburning (825), the purified exhaust gas is let off by a switching system (811) and after each switching period is directed by the switching system (811) via a second line (814) into the polluted exhaust gas (801) and a buffer (812) until the exhaust gas has a predefined purity level, and the switching system (811) is then switched in a way that the exhaust gas of the regenerative afterburning having the required purity level is let off via a first line (818), whereby the polluted exhaust gas which is collected in the buffer is further let to the polluted exhaust gas (801) via the second line (814), wherein the switching system (811) is a switchable distributor for fluids as defined in any one of claims 1 to 4.

12. An apparatus for carrying out the process according to any one of claims 1 to 11, wherein the apparatus has at least one switchable distributor for fluids as defined in any one of claims 1 to 4 as well as at least one instationar working reactor, adsorber and/or absorber (605, 705, 825).

13. An apparatus according to claim 12, being additionally equipped with at least on buffer container (712, 812).

14. An apparatus according to claim 12 or 13, wherein that instationar working reactor, adsorber and/or absorber (605, 705, 825) is equipped with storage means, in particular with honeycombs or bulk material.

15. An apparatus according to any one of claims 12 to 14, which is an apparatus for regenerative afterburning comprising a two-bed system for the regenerative afterbuming of polluted exhaust gases as well as a switching system (811), a buffer container (812) and a line (814) leading form the buffer container (812) and the switching system (811) to the polluted exhaust gas (801), wherein the switching system (811) is a switchable distributor for fluids as defined in any one of claims 1 to 4.

16. Switchable distributor for the distribution of fluids in instationary processes in systems for drying and adsorption, pressure-swing-adsorption-systems, systems for thermal afterburning or absorption/desorption systems with at least three connections (405, 406, 407) and at least two sealings (403, 403') as well as a translating part (401) with at least one closing plate (402), which can be moved lengthwise with the translating part (401), wherein the closing plate (402) has a geometry which is adapted so that holes or cuttings (506) in the closing plate (402) allow for a bypass flow while the closing plate (402) is moved and are covered when the closing plate (402) is pressed against the sealings (403, 403', 503, 503').

## Revendications

1. Procédé de commutation et de distribution de fluides dans des processus transitoires, dans des installations de séchage et d'adsorption, des installations d'adsorption à variation de pression, des installations de post-combustion thermique et/ou des installations d'adsorption/désorption, **caractérisé en ce que** les fluides sont répartis, par au moins un distributeur commutable, ayant au moins trois raccordements (405, 406, 407) et au moins deux joints d'étanchéité (403, 403') ainsi qu'un coulisseau (401), avec au moins une plaque de délimitation (402), déplaçable en direction longitudinale à l'aide du coulisseau (401).

2. Procédé selon la revendication 1, le distributeur commutable prévu pour des fluides présentant trois raccordements (405, 406, 407) et deux joints d'étanchéité (403, 403'), ainsi qu'un coulisseau (401) avec une plaque de fermeture (402).

3. Procédé selon la revendication 1 ou 2, **caractérisé en ce que** le fluide est un gaz.

4. Procédé selon l'une des revendications 1 à 3, **caractérisé en ce que**, dans le distributeur commutable pour des fluides, la plaque de fermeture (402) présente une géométrie de configuration appropriée, de sorte que des perçages ou des évidements (506) ménagés sur la plaque de fermeture (402) permettent, lors du déplacement de la plaque de fermeture (402), d'avoir un écoulement de dérivation et sont couverts après pressage sur les joints d'étanchéité (403, 403').

5. Procédé selon l'une des revendications 1 à 4, dans lequel un fluide entrant (601, 701, 801) est dirigé sur au moins deux distributeurs (603, 604, 703, 704, 803, 804) commutables, tel que défini dans l'une des revendications 1 à 4, un distributeur commutable (603, 703, 803) étant commuté de manière que le fluide entrant est dirigé vers un processus transitoire (605, 705, 825), et un deuxième distributeur commutable (604, 704, 804) étant commuté de manière qu'il reçoive de nouveau le fluide sortant du processus transitoire (605, 705, 825) et que, après la période de commutation, le deuxième distributeur commutable (604, 704, 804) soit commuté de manière qu'il dirige le fluide entrant vers le processus transitoire (605, 705, 825) et le premier distributeur commutable (803) est commuté de manière à recevoir de nouveau le fluide sortant du processus transitoire (605, 705, 825).

6. Procédé selon la revendication 5, dans lequel, après survenance du moment de commutation, un troisième commutateur (711, 811) est activé, dérivant le volume mort pendant le processus de commutation, par un tampon (712, 812) avec au moins deux conduites d'évacuation (713, 714, 813, 814), une première conduite d'évacuation (713, 813) menant au fluide de sortie.

7. Procédé selon la revendication 6, **caractérisé en ce que** le tampon (712, 812) est maintenu sous une légère pression négative par rapport à la pression régnant dans la première conduite d'évacuation (713, 813).

8. Procédé selon la revendication 6 ou 7, **caractérisé en ce que**, dans le tampon (712, 812), sont montées des chicanes empêchant toute remise en mélange avec le fluide de sortie.

9. Procédé selon l'une des revendications 6 à 8, **caractérisé en ce que**, concernant le troisième commutateur (711, 811), il s'agit d'un distributeur commutable pour des fluides, tel que défini à l'une des revendications 1 à 4.

10. Procédé selon l'une des revendications 1 à 9, sachant que, concernant le processus transitoire, il s'agit d'un procédé de post-combustion régénérative de gaz d'échappement contenant des substances nocives.

11. Procédé selon la revendication 10, dans lequel des gaz d'échappement (801 ) contenant une substance nocive, venant d'une installation à deux lits, sont amenés à une post-combustion (825) régénérative, qui évacue les gaz d'échappement épurés par un système de commutation (811) et, après chaque période de commutation par le système de commutation (811), les guide par une deuxième conduite d'évacuation (814) dans les gaz d'échappement (801) contenant des substances nocives, et un tampon (812), jusqu'à ce que les gaz d'échappement présentent un degré de pureté prescrit, et le système de commutation (811) étant ensuite commuté de manière que les gaz d'échappement, provenant de la post-combustion régénérative, gaz présentant le degré de portée requis, soient évacués par une première conduite d'évacuation (818), le gaz contenant des substances nocives ayant été emprisonnées dans le réservoir tampon étant de nouveau amené, par l'intermédiaire de la deuxième conduite d'évacuation (814), aux gaz d'échappement (801) contenant des substances nocives, s'agissant, au sujet du système de commutation (811), d'un distributeur commutable pour des fluides, tel que défini à l'une des revendications 1 à 4.

12. Dispositif de mise en oeuvre du procédé selon l'une des revendications 1 à 11, le dispositif présentant au moins un distributeur commutable, pour des fluides, tel que défini dans l'une des revendications 1 à 4, ainsi qu'au moins un réacteur, un adsorbeur et/ou un absorbeur (605, 705, 825), travaillant en mode transitoire.

13. Dispositif selon la revendication 12, présentant en outre au moins un réservoir tampon (712, 812).

14. Dispositif selon la revendication 12 ou 13, **caractérisé en ce que** le réacteur, l'adsorbeur et/ou l'absorbeur (605, 705, 825) travaillant de façon transitoire est muni de masses accumulatrices, en particulier avec des corps à nid d'abeilles ou bien un produit en vrac.

15. Dispositif selon l'une des revendications 12 à 14, s'agissant d'un dispositif de post-combustion régénérative, comprenant une installation à deux lits pour effectuer la post-combustion régénérative de gaz d'échappement contenant des substances nocives, ainsi qu'un système de commutation (811), un réservoir tampon (812) et une conduite d'évacuation (814) depuis le réservoir tampon (812) et le système de commutation (811) pour les gaz d'échappement (801) contenant les substances nocives, s'agissant, concernant le système de commutation (811), d'un distributeur commutable pour des fluides, tel que défini à l'une des revendications 1 à 4.

16. Distributeur commutable pour la distribution de fluides dans des processus transitoires, se déroulant dans des installations de séchage et d'adsorption, des installations d'adsorption par changement de pression, des installations de post-combusion thermique ou des installations d'adsorption/désorption avec au moins trois raccordements (405, 406, 407) et au moins deux joints d'étanchéité (403, 403') ainsi qu'un coulisseau (401 ) avec au moins une plaque de fermeture (402), déplaçable en direction longitudinale à l'aide du coulisseau (401), **caractérisé en ce que** la plaque de fermeture (402) présente une géométrie appropriée, de sorte que des perçages ou des découpures (506). ménagé(e)s sur la plaque de fermeture (402), permettent un écoulement de dérivation lors du déplacement de la plaque de fermeture (402) et soient couvertes après pressage sur les joints d'étanchéité (403, 403', 503, 503').
